# EUROPÄISCHE PATENTSCHRIFT

(11) **EP 3 071 317 B1**
(45) Veröffentlichungstag und Bekanntmachung des Hinweises auf die Patenterteilung: **22.01.2020**
(21) Anmeldenummer: 14809304.0
(22) Anmeldetag: 20.11.2014
(51) Int. Cl.: B01D 63/02, B01D 65/00

(54) **FILTERMODUL**
FILTER MODULE
MODULE FILTRANT

(30) Priorität: 21.11.2013 DE 102013112863
(43) Veröffentlichungstag der Anmeldung: 28.09.2016
(73) Patentinhaber: Sartorius Stedim Biotech GmbH, 37079 Göttingen (DE)
(72) Erfinder: LAUSCH, Ralf, 37079 Göttingen (DE); NIKOLOUDIS, Paschalis, 37079 Göttingen (DE); REQUATE, Wilhelm, 37308 Heilbad Heiligenstadt (DE); WORTMEYER, Johannes, 37085 Göttingen (DE)
(74) Vertreter: Schneider, Peter Christian
(86) Internationale Anmeldenummer: PCT/EP2014/075077
(87) Internationale Veröffentlichungsnummer: WO 2015/075099

(56) Entgegenhaltungen:
- EP-A1- 0 315 252
- WO-A1-01/60502
- WO-A1-98/45028
- WO-A2-01/77284
- DE-A1-102007 052 088
- US-A- 4 283 284
- US-A1- 2003 102 264
- US-A1- 2004 195 165
- US-A1- 2013 061 748

## Beschreibung

### Gebiet der Erfindung

Die Erfindung betrifft ein Filtermodul mit einem aus einem Kunststoff ausgebildeten Gehäuse und einem in dem Gehäuse angeordneten Filter aus einem Kunststoff, wobei der Filter als ein Hohlfaserelement mit einer Mehrzahl von Hohlfasermembranen ausgebildet und über ein aus einem Kunststoff ausgebildetes Zwischenstück mit dem Gehäuse verbunden ist, wobei das Zwischenstück mittels eines Klebstoffes zwischen einer ersten Klebefläche des Gehäuses und einer zweiten Klebefläche des Zwischenstückes verklebt ist, wobei das Zwischenstück mit seiner ersten Klebefläche mittels des Klebstoffes mit einer zweiten Klebefläche des Hohlfaserelementes verklebt ist, wobei mindestens die erste Klebefläche des Gehäuses vor dem Verkleben durch eine Plasma- oder Korona-Vorbehandlung aktiviert wurde, und wobei die Hohlfasermembranen des Hohlfaserelementes an einem ersten Ende offen sind.

Die Erfindung betrifft weiterhin ein Verfahren zur Herstellung eines Filtermoduls nach einem der Ansprüche 1 bis 7.

### Stand der Technik

Aus der DE 10 2007 052 088 A1 ist ein Filtermodul mit einem aus einem Kunststoff ausgebildeten schlauchförmigen Gehäuse bekannt, in dem ein Filter, der von einem ringförmigen Bündel von Hohlfasermembranen gebildet wird, angeordnet ist. Das aus einem Kunststoff ausgebildete Gehäuse weist an seinen Enden jeweils eine erste Klebefläche auf, die jeweils mit einer von den Enden des Membranfilters gebildeten zweiten Klebefläche mit Klebstoff verklebt sind. Die Hohlfasermembranen sind an ihrem einem Einlass benachbarten Ende mit einem Gießharz verschlossen und an ihrem einem Auslass zugewandten anderen Ende offen.

Dabei müssen die Klebungen nicht nur dem Filtrationsdruck, sondern auch den in der Biotechnologie notwendigen Prüfdrücken standhalten.

Nachteilig bei dem bekannten Filtermodul ist, dass an den Enden relativ aufwendig zu montierende, die Schlauchenden des Gehäuses übergreifende Schlauchhülsen angeordnet sind. Gleichwohl besteht die Gefahr, dass die Verklebung zwischen den Klebeflächen den in der Biotechnologie benötigten hohen Prüfdrücken nicht standhält.

Weiterhin ist aus der US 2003/102264 A1 ein Filtermodul mit einem aus einem Kunststoff (Polypropylen) ausgebildeten Gehäuse und einem in dem Gehäuse angeordneten Filter aus einem Kunststoff, bekannt. Dabei ist der Filter über ein aus einem Kunststoff (Polypropylen) ausgebildetes Zwischenstück mit dem Gehäuse verbunden. Das Zwischenstück ist mittels eines Klebstoffes (z. B. Polyurethan) mit dem Filter verbunden. Dabei ist es bekannt, die Oberfläche des Zwischenstückes durch eine Plasma- oder Corona-Vorbehandlung zu aktivieren.

Nachteilig bei dem aus der US 2003/102264 A1 bekannten Filtermodul ist, dass das als Rohr ausgebildete Gehäuse und der Zwischenring aus dem gleichen Material (Polypropylen) ausgebildet sind. Um gegenüber der zwischen dem Filter und dem Zwischenstück angeordneter Vergussmasse (Polyurethan) eine feste Verbindung zu gewährleisten, weist das Zwischenstück an seinem dem Gehäuse abgewandten Ende einen Ringanker auf, mit dem das Zwischenstück in die Vergussmasse eingebettet ist. Nachteilig dabei ist weiterhin, dass das Zwischenstück relativ aufwändig in der Herstellung und damit kostenintensiv ist.

Aus der WO 01/77284 A2 ist weiterhin ein Filtermodul mit einem mehrteiligen Gehäuse aus Kunststoffen bekannt. Das Gehäuse weist ein seitlich umlaufendes starres Konstruktionsteil auf, in dem Hohlfasermatten aus Hohlfasern über Kreuz übereinandergelegt vorliegen und an ihren Rändern mit dem starren Konstruktionsteil mit Polyurethan vergossen bzw. verklebt sind. Oben und unten ist das starre Konstruktionsteil mit dem aufgenommenen Modul von elastischen Wandungen abgedeckt, die jeweils mit einem Deckrahmen oberhalb und unterhalb mit dem Hohlfasermodul bzw. starrem Konstruktionsteil verschweißt sind.

Nachteilig bei dem aus der WO 01/77284 A2 bekannten Filtermodul ist, dass die Kunststoffe des starren Konstruktionsteils, der elastischen Wandungen und der beiden Deckrahmen zum Verschweißen geeignet sein müssen. Weiterhin nachteilig ist, dass das Filtermodul starr ausgebildet ist und daher nicht als eine flexible Verbindung eingesetzt werden kann.

Aus der US 2004/0195165 A1 ist ein Filtermodul mit einem aus einem Kunststoff ausgebildeten relativ starren Gehäuse und einem in dem Gehäuse angeordneten Filter aus einem Kunststoff bekannt, wobei der Filter als ein Hohlfaserelement mit einer Mehrzahl von Hohlfasermembranen ausgebildet ist, das über ein T-förmiges Zwischenstück mit dem Gehäuse verbunden ist.

Nachteilig bei dem bekannten Filtermodul ist, dass das Hohlfaserelement zur Bildung einer scheibenförmigen Fixierung in dem Zwischenstück vergossen werden muss und eine zusätzliche Kappe als weiteres Teil notwendig ist. Weiterhin nachteilig ist, dass das Gehäuse starr ausgebildet ist. Auch ist das Zwischenstück relativ aufwändig in der Herstellung und damit kostenintensiv.

Aus der US 2013/0061748 A1 ist eine Vorrichtung zur Entgasung übersättigter Flüssigkeiten bekannt, die einen aus Kunststoff ausgebildeten Außenmantel eines Gehäuses aufweist, dessen Wandung zum Austritt von Gas porös ausgebildet ist. Ein inneres Fördermittel leitet die zu entgasende Flüssigkeit von einem Einlassteil zu einem Auslassteil. Zwischen dem innerem Fördermittel und dem Außenmantel ist eine Kammer angeordnet, die einen ringförmigen Kanal bildet. Das innere Fördermittel ist zur Kammer hin gasdurchlässig aber flüssigkeitsdicht ausgebildet. Entsprechend ist im Bereich der Gehäuseenden zur Abdichtung nach Außen jeweils ein Schrumpfschlauch vorgesehen.

### Aufgabenstellung

Es ist die Aufgabe der vorliegenden Erfindung, die bekannten Filtermodule und die Verfahren zu ihrer Herstellung so zu verbessern, dass sie einerseits kostengünstig aufgebaut sind und andererseits einem Prüfdruck bis zu 5 bar standhalten.

### Darlegung der Erfindung

Die Aufgabe bezüglich der Vorrichtung wird in Verbindung mit den Merkmalen des Oberbegriffs von Anspruch 1 dadurch gelöst, dass das Gehäuse mit seiner ersten Klebefläche aus einem ersten Kunststoff und das Zwischenstück mit seiner zweiten Klebefläche aus einem zweiten Kunststoff, der verschieden vom ersten Kunststoff ist, ausgebildet ist, dass das Gehäuse als ein flexibler Schlauch aus einem Silikon ausgebildet ist, dass die Hohlfasermembranen des Hohlfaserelementes aus einem Polyethersulfon ausgebildet sind, dass das Zwischenstück aus einem Thermoplast ausgebildet ist, und dass das Zwischenstück als ein T-förmiges Anschlussstück mit einem radial verlaufenden Abzweig und einem Durchgangskanal als Verbindung zu einem zwischen Schlauch und Hohlfaserelement angeordneten ringförmigen Kanal ausgebildet ist.

Durch die Plasma- oder Korona-Vorbehandlung wird die Oberfläche von Polymeren mittels elektrischer Entladung verändert. Dabei entstehen an der Oberfläche des Trägermaterials funktionale Gruppen, welche eine verbesserte Haftung und Benetzbarkeit ermöglichen. Die Vorbehandlung mit atmosphärischem Plasma ist dabei besonders kosteneffizient. Eine Oberflächenbehandlung durch Plasmaaktivierung ermöglicht eine Verklebung von ausreichender Festigkeit und auch von ausreichender Dauerfestigkeit. Insbesondere ist es auch möglich unterschiedliche Kunststoffe miteinander zu verkleben.

Bevorzugte Ausführungsformen sind Gegenstand der abhängigen Ansprüche.

Das Gehäuse ist als ein flexibler Schlauch und der Filter als ein Hohlfaserelement mit einer Mehrzahl von Hohlfasermembranen ausgebildet. Dadurch weist das gesamte Filtermodul eine gewisse Flexibilität auf, die das Anschließen des Filtermoduls vereinfacht. Das Filtermodul dient somit nicht nur zur Filtration von durchgeleiteten Medien sondern auch als eine flexible Verbindung.

Das oder die Zwischenstücke ist/sind als ein T-förmiges Anschlussstück mit einer Verbindung zu dem ringförmigen Kanal ausgebildet. Dabei ist sowohl ein Dead-End-Betrieb als auch ein Cross-Flow-Betrieb möglich.

Das Hohlfaserelement ist an mindestens einem ersten Ende in radialer Richtung gegenüber dem benachbarten Schlauchende abgedichtet und vorzugsweise ist das erste Ende des Hohlfaserelementes direkt mit dem mit dem Schlauch festverbundenen Zwischenstück verklebt. Insbesondere sind die Hohlfasermembranen des Hohlfaserelementes an dem ersten Ende offen. An dem dem ersten Ende abgewandten zweiten Ende des Hohlfaserelementes können die Hohlfasermembranen ebenfalls geöffnet oder aber verschlossen sein. Zwischen dem Schlauch und dem Hohlfaserelement ist ein ringförmiger Kanal angeordnet, der mit mindestens einem Anschluss in Verbindung steht. Je nach Ausgestaltung kann der Anmeldungsgegenstand somit im "Dead-End"- als auch im "Cross-Flow"- Modus betrieben werden.

Der Schlauch ist aus einem Silikon ausgebildet, während die Hohlfasermembranen aus einem Polyethersulfon ausgebildet sind. Insbesondere ist dabei das erste Ende des Hohlfaserelementes mit seinen Hohlfasermembranen mit dem Schlauch oder mit dem Zwischenstück mit einem Polyurethan als Klebstoff verklebt oder vergossen. Das Zwischenstück ist dabei aus einem Thermoplast, bevorzugt Polypropylen ausgebildet sein.

Durch die oben geschilderte Plasma- oder Korona-Vorbehandlung der Klebeflächen lassen sich gleiche oder die unterschiedlichen Kunststoffe mit der notwendigen Festigkeit verkleben oder auch vergießen.

In einer weiteren bevorzugten Ausführungsform der Erfindung ist das Hohlfaserelement an seinem dem ersten Ende abgewandten zweiten Ende in radialer Richtung gegenüber dem benachbarten Schlauchende abgedichtet, wobei seine Hohlfasern an dem zweiten Ende offen sind. Das zweite Ende des Hohlfaserelementes ist dabei direkt mit dem Schlauch oder mit einem mit dem Schlauch fest verbundenen zweiten Zwischenstück verklebt.

Gemäß einer weiteren bevorzugten Ausführungsform der Erfindung ist das Filtermodul mit einem flexiblen Behälter verbunden und bildet mit diesem eine vorsterilisierbare anschlussfertige Einheit. Dabei kann der flexible Behälter (Bag) insbesondere als ein Einwegbioreaktor (Single-Use-Bioreaktor) ausgebildet sein.

In jedem Fall sind auf der Anströmseite des Filtermoduls die Hohlfasermembranen fest und dicht mit dem Schlauch oder dem Anschlussstück verbunden und die einzelnen Hohlfasern sind offen, sodass sie von innen durchströmt werden können. Während die Hohlfasern zur Durchführung eines Filterintegritätstests mit einem relativ hohen Prüfdruck belastet werden, wird der das Hohlfaserelement umgebende ringförmige Kanal und damit auch das als Schlauch ausgebildete Gehäuse mit einem erheblich geringeren Druck belastet. Damit ist sichergestellt, dass der zulässige Betriebsdruck des Schlauches, beispielsweise des Silikonschlauches, erheblich unter dem Prüfdruck des Hohlfaserelementes liegt und der Silikonschlauch während des Prüfens nicht in unerwünschter Weise belastet wird.

Die Aufgabe bezüglich des Verfahrens wird in Verbindung mit dem Oberbegriff des Anspruches 8 dadurch gelöst, dass folgende Schritte durchgeführt werden:
a) mindestens die erste Klebefläche des Gehäuses wird vor dem Verkleben durch eine Plasma- oder Korona-Vorbehandlung aktiviert,
b) die Klebeflächen werden mittels eines Klebers miteinander verklebt, und
c) der Kleber wird ausgehärtet.

Durch die Aktivierung der Klebeflächen durch die Plasma- oder Korona-Vorbehandlung vor dem Verkleben, entsteht eine Klebeverbindung die beispielsweise bei einem durchzuführenden Drucktest eine höhere Festigkeit aufweist. Insbesondere ist es möglich, Silikon oder Polypropylen mit Polyethersulfon und mit Polyurethan als Klebstoff zu verkleben.

Gemäß einer weiteren bevorzugten Ausführungsform der Erfindung wird der Kleber im Schritt b) vor dem Auftragen oder Vergießen aus zwei Komponenten in einem vorgegebenen Verhältnis gemischt. Als vorteilhalft hat sich erwiesen, den Kleber im Schritt c) in einer temperierten Zentrifuge auszuhärten.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt eines Filtermoduls mit einem als Schlauch ausgebildeten Gehäuse und einem als Hohlfaserelement ausgebildeten Filter, das sowohl für einen Dead-End-Betrieb als auch für einen Cross-Flow-Betrieb geeignet ist,
- Figur 2:: eine Seitenansicht im Schnitt eines Filtermoduls mit einem als Schlauch ausgebildeten Gehäuse und einem als ein Hohlfaserelement ausgebildeten Filter, wobei die Hohlfasermembranen des Hohlfaserelementes an dem freien zweiten Ende verschlossen sind,
- Figur 3:: eine Seitenansicht im Schnitt und Ausriss des als Schlauch ausgebildeten Gehäuses von Figur 1,
- Figur 4:: eine Seitenansicht im Schnitt des Zwischenstückes von Figur 1,
- Figur 5:: eine Seitenansicht im Schnitt und Ausriss des Hohlfaserelementes von Figur 1,
- Figur 6:: eine Seitenansicht im Schnitt und Ausriss eines weiteren Filtermoduls, dessen als Hohlfaserelement ausgebildeter Filter mit seinem ersten Ende in einem als Schlauch ausgebildeten Gehäuse im Schlauch mit Klebstoff angegossen und freigeschnitten ist,
- Figur 7:: eine Seitenansicht im Schnitt und Ausriss eines weiteren Filtermoduls bei dem das erste Ende eines Hohlfaserelementes in ein hülsenförmiges Zwischenstück geklebt ist, wobei das Zwischenstück seinerseits mit dem Schlauch verklebt ist und
- Figur 8:: eine Seitenansicht im Schnitt und Ausriss mit auf das erste Ende des Hohlfaserelementes aufgeklebten hülsenförmigen Zwischenstück, das einerseits in dem ersten Ende des Schlauches verklebt ist und das andererseits mit einem aufgesetzten Adapter verschweißt ist.

### Beschreibung bevorzugter Ausführungsformen

Ein Filtermodul 1 besteht im Wesentlichen aus einem Gehäuse 2 und einem Filter 3.

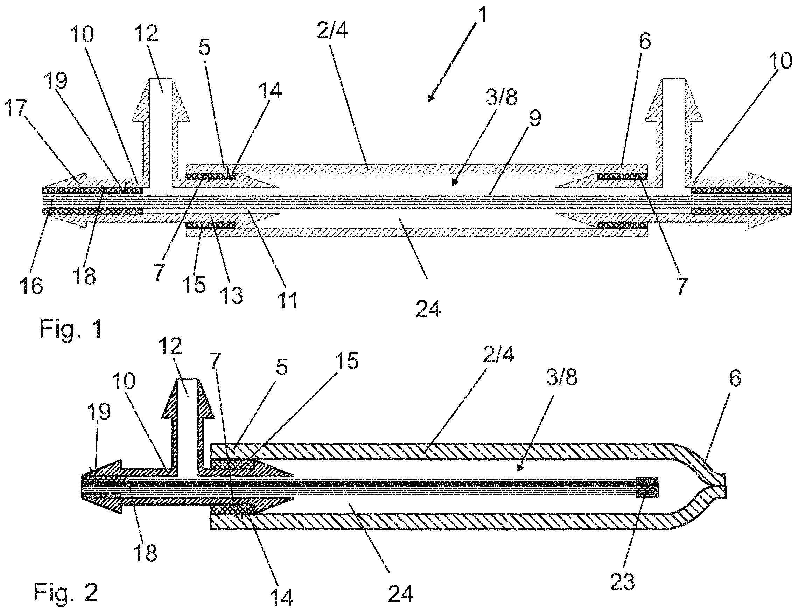

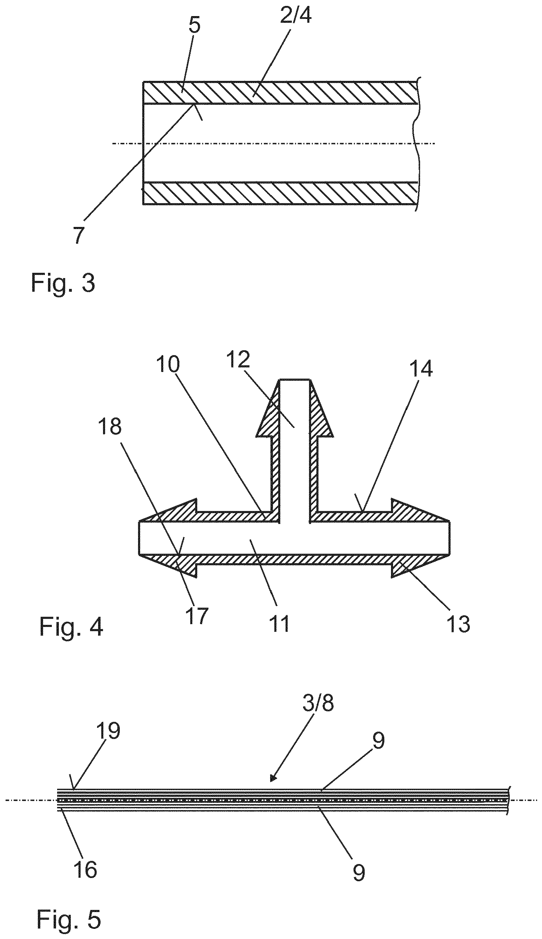

In den Ausführungsbeispielen der Figuren 1 bis 8 ist das Gehäuse 2 als ein flexibler Schlauch aus einem ersten Kunststoff, beispielsweise einem Silikon oder einem Polypropylen, ausgebildet. An seinem ersten Ende 5 und entsprechend dem Ausführungsbeispiel von Figur 1 auch an seinem zweiten Ende 6 weist der Schlauch 4 jeweils eine erste Klebefläche 7 auf.

Entsprechend den Ausführungsbeispielen der Figuren 1, 2 und 5 bis 8 ist der Filter 3 als ein Hohlfaserelement 8 mit einer Mehrzahl von Hohlfasermembranen 9 ausgebildet. In den Ausführungsbeispielen bestehen die Hohlfasermembranen 9 und damit das Hohlfaserelement 8 aus einem Polyethersulfon.

Entsprechend dem Ausführungsbeispielen der Figuren 1 und 2 ist das Hohlfaserelement 8 über ein T-förmiges Zwischenstück 10 mit dem Schlauch 4 verbunden. Das Zwischenstück 10 weist einen Durchgangskanal 11 und einen radial verlaufenden Abzweig 12 auf. An seinem dem Schlauch 4 zugewandten ersten Ende 13 weist das Zwischenstück 10 eine zweite Klebefläche 14 auf, die mittels eines Klebstoffes 15, im Ausführungsbeispiel einem Polyurethan, verklebt ist. Vor dem Verkleben wurde die erste Klebefläche 7 durch eine Plasmavorbehandlung aktiviert.

Zwischen dem Schlauch 2 und dem Hohlfaserelement 8 ist ein ringförmiger Kanal 24 angeordnet, der mit mindestens einem Anschluss 25 in Verbindung steht.

Im Ausführungsbeispiel der Figuren 1 und 2 ist das Hohlfaserelement mit seinem dem Zwischenstück 10 zugewandten ersten Ende 16 im zweiten Ende 17 des Zwischenstückes 10 mit dem Klebstoff dichtend verklebt oder vergossen. Die Hohlfasermembranen 9 des ersten Endes 16 des Hohlfaserelementes 8 sind dabei geöffnet.

Die Innenfläche des zweiten Endes 17 des Zwischenstückes 10 bildet gegenüber dem ersten Ende 16 des Hohlfaserelementes 8 eine erste Klebefläche 18, während der Umfang des ersten Endes 16 eine zweite Klebefläche 19 bildet, die über den Klebstoff 15 mit der ersten Klebefläche 18 verklebbar ist. Auch hier kann zur Steigerung der Festigkeit der Klebeverbindung die erste Klebefläche 18 des Zwischenstückes 10 durch eine Plasmavorbehandlung aktiviert werden.

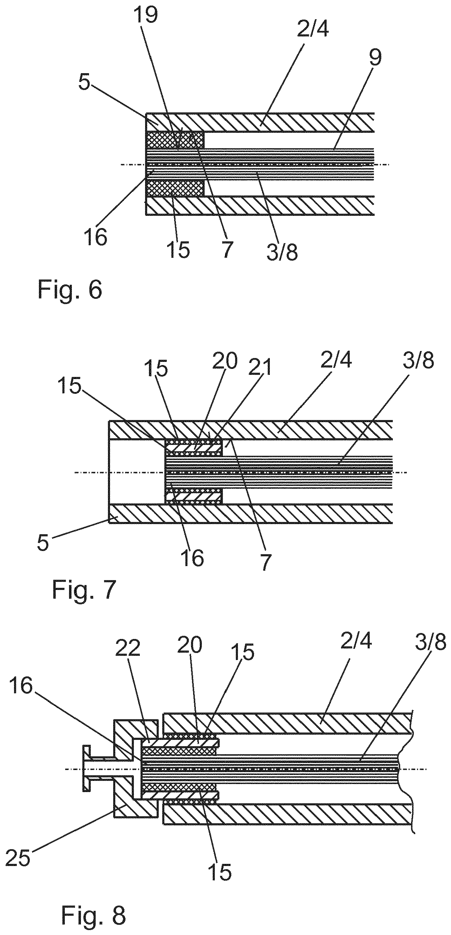

Entsprechend dem Ausführungsbeispiel der Figur 6 ist das erste Ende 16 des Hohlfaserelementes 8 ohne Zwischenstück direkt mit dem ersten Ende 5 des Schlauches 4 verbunden. Mittels Klebstoff 15 ist die erste Klebefläche 7 des Schlauches 4 über den Klebstoff 15 direkt mit der zweiten Klebefläche 19 des ersten Endes 16 des Hohlfaserelementes 8 verklebt. Entsprechend wurde vor dem Verkleben die erste Klebefläche 7 durch eine Plasmavorbehandlung aktiviert.

Entsprechend den Ausführungsbeispielen der Figuren 7 und 8 ist das Hohlfaserelement 8 über ein hülsenförmiges Zwischenstück 20 mit der ersten Klebefläche 7 des Schlauches 4 und der zweiten Klebefläche 21 des hülsenförmigen Zwischenstückes 20 über den Klebstoff 15 verbunden.

Während im Ausführungsbeispiel der Figur 7 das erste Ende 16 etwas zurückgesetzt in dem ersten Ende 5 des Schlauches 4 angeordnet ist, ragt beim Ausführungsbeispiel der Figur 8 das erste Ende 16 des Hohlfaserelementes 8 zusammen mit dem Ende 22 aus dem ersten Ende 5 des Schlauches 4 heraus. Dabei ist auf das herausragende Ende 22 des hülsenförmigen Zwischenstückes 20 ein Adapter 25 oder Anschluss aufgeschweißt.

Entsprechend dem Ausführungsbeispiel der Figur 2 ist der Schlauch 4 an seinem zweiten Ende 6, beispielsweise durch Verschweißen, geschlossen. Entsprechend sind die Hohlfasermembranen 9 am zweiten Ende 23 des Hohlfaserelementes 8 ebenfalls verschlossen. Das zweite Ende 23 ist dabei frei im Schlauch 4 angeordnet.

Zur Herstellung des Filtermoduls werden beispielsweise die folgenden Schritte durchgeführt:
a) die erste Klebefläche 7 des Gehäuses 2 wird mit Plasma aktiviert,
b1) der Zwei-Komponenten-Klebstoff 15 wird im vorgegebenen Verhältnis von Harz zu Härter, beispielsweise 100 : 80, gemischt,
b2) die Hohlfasermembranen 9 des Hohlfaserelementes 8 werden im Schlauch 4 oder Zwischenstück 10, 20 vergossen oder verklebt,
c) das Filtermodul 1 wird in einer temperierten Zentrifuge bei 40°C für 60 Minuten bei 960 Umdrehungen pro Minute ausgehärtet,
c1) die Filtermodule werden länger als 24 Stunden endausgehärtet,
d) die Filtermodule 1 werden bei einem Druck von > 2 bar geprüft,
e) die Filtermodule werden bei 121°C im Autoklaven sterilisiert.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Filtermodul
- 2: Gehäuse von 1
- 3: Filter von 1
- 4: Schlauch
- 5: erstes Ende von 4
- 6: zweites Ende von 4
- 7: erste Klebefläche von 2
- 8: Hohlfaserelement
- 9: Hohlfasermembran von 8
- 10: Zwischenstück (T-förmig)
- 11: Durchgangskanal von 10
- 12: Abzweig von 10
- 13: erstes Ende von 10
- 14: zweite Klebefläche von 10
- 15: Klebstoff
- 16: erstes Ende von 8
- 17: zweites Ende von 10
- 18: erste Klebefläche von 20
- 19: zweite Klebefläche von 16
- 20: Zwischenstück (hülsenförmig)
- 21: zweite Klebefläche von 20
- 22: herausragendes Ende von 20
- 23: zweites Ende von 8
- 24: ringförmiger Kanal von 1
- 25: Adapter

## Patentansprüche

1. Filtermodul (1) mit einem aus einem Kunststoff ausgebildeten Gehäuse (2) und einem in dem Gehäuse (2) angeordneten Filter (3) aus einem Kunststoff, wobei der Filter (3) als ein Hohlfaserelement (8) mit einer Mehrzahl von Hohlfasermembranen (9) ausgebildet und über ein aus einem Kunststoff ausgebildetes Zwischenstück (10) mit dem Gehäuse (2) verbunden ist, wobei das Zwischenstück (10) mittels eines Klebstoffes (15) zwischen einer ersten Klebefläche (7) des Gehäuses (2) und einer zweiten Klebefläche (14) des Zwischenstückes (10) verklebt ist, wobei das Zwischenstück (10) mit seiner ersten Klebefläche (18) mittels des Klebstoffes (15) mit einer zweiten Klebefläche (19) des Hohlfaserelementes (8) verklebt ist, wobei mindestens die erste Klebefläche (7) des Gehäuses (2) vor dem Verkleben durch eine Plasma- oder Korona-Vorbehandlung aktiviert wurde, wobei das Hohlfaserelement (8) an mindestens einem ersten Ende (16) in radialer Richtung gegenüber dem benachbarten Schlauchende (5) abgedichtet ist, und wobei die Hohlfasermembranen (9) des Hohlfaserelementes (8) an dem ersten Ende (16) offen sind,
**dadurch gekennzeichnet,**
**dass** das Gehäuse (2) mit seiner ersten Klebefläche (7) aus einem ersten Kunststoff und das Zwischenstück (10) mit seiner zweiten Klebefläche (14) aus einem zweiten Kunststoff, der verschieden vom ersten Kunststoff ist, ausgebildet ist,
**dass** das Gehäuse (2) als ein flexibler Schlauch (4) aus einem Silikon ausgebildet ist,
**dass** die Hohlfasermembranen des Hohlfaserelementes (8) aus einem Polyethersulfon ausgebildet sind,
**dass** das Zwischenstück (10) aus einem Thermoplast ausgebildet ist, und
**dass** das Zwischenstück (10) als ein T-förmiges Anschlussstück mit einem radial verlaufenden Abzweig (12) und einem Durchgangskanal (11) als Verbindung zu einem zwischen Schlauch (4) und Hohlfaserelement (8) angeordneten ringförmigen Kanal (24) ausgebildet ist.

2. Filtermodul nach Anspruch 1,
**dadurch gekennzeichnet,**
**dass** das erste Ende (16) des Hohlfaserelementes (8) direkt mit dem mit dem Schlauch (2) fest verbundenen Zwischenstück (10) verklebt ist.

3. Filtermodul nach einem der Ansprüche 1 bis 2,
**dadurch gekennzeichnet,**
**dass** das erste Ende (16) des Hohlfaserelementes (8) mit seinen Hohlfasermembranen (9) mit dem Zwischenstück (10) mit einem Polyurethan als Klebstoff (15) verklebt ist.

4. Filtermodul nach einem der Ansprüche 1 bis 3,
**dadurch gekennzeichnet,**
**dass** das Zwischenstück (10) aus einem Polypropylen, ausgebildet ist.

5. Filtermodul nach einem der Ansprüche 1 bis 4,
**dadurch gekennzeichnet,**
**dass** das Hohlfaserelement (8) an seinem dem ersten Ende (16) abgewandten zweiten Ende (23) in radialer Richtung gegenüber dem benachbarten Schlauchende (6) abgedichtet ist,
**dass** seine Hohlfasermembranen (9) an dem zweiten Ende (23) offen sind, und dass das zweite Ende (23) des Hohlfaserelementes (8) direkt mit dem Schlauch (2) oder mit einem mit dem Schlauch (2) fest verbundenen zweiten Zwischenstück (10) verklebt ist.

6. Filtermodul nach einem der Ansprüche 1 bis 4,
**dadurch gekennzeichnet,**
**dass** die Hohlfasermembranen (9) des Hohlfaserelementes (8) an dem dem ersten Ende (16) abgewandten zweiten Ende (23) verklebt und geschlossen sind.

7. Filtermodul nach einem der Ansprüche 1 bis 6,
**dadurch gekennzeichnet,**
**dass** das Filtermodul (1) mit einem flexiblen Behälter verbunden ist, die eine vorsterilisierbare anschlussfertige Einheit bilden.

8. Verfahren zur Herstellung eines Filtermoduls (1) nach einem der Ansprüche 1 bis 7, **dadurch gekennzeichnet,**
**dass** folgende Schritte durchgeführt werden:
a) mindestens die erste Klebefläche (7) des Gehäuses (2) wird vor dem Verkleben durch eine Plasma- oder Korona-Vorbehandlung aktiviert,
b) die Klebeflächen (7, 14, 18, 19) werden mittels eines Klebstoffes (15) miteinander verklebt, und
c) der Klebstoff wird ausgehärtet.

9. Verfahren nach Anspruch 8,
**dadurch gekennzeichnet,**
**dass** der Klebstoff (15) im Schritt b) vor dem Auftragen oder Vergießen aus zwei Komponenten in einem vorgegebenen Verhältnis gemischt wird.

10. Verfahren nach Anspruch 8 oder 9,
**dadurch gekennzeichnet,**
**dass** der Kleber im Schritt c) in einer temperierten Zentrifuge ausgehärtet wird.

## Claims

1. A filter module (1) with a housing (2) made of plastic and a filter (3) made of plastic, which is arranged in the housing (2), wherein the filter (3) is designed as a hollow fiber element (8) with a plurality of hollow fiber membranes (9) and is connected to the housing (2) by an intermediate piece (10) made of plastic, wherein the intermediate piece (10) is adhesively bonded using glue (15) between a first bonding surface (7) of the housing (2) and a second bonding surface (14) of the intermediate piece (10), wherein the intermediate piece (10) with its first bonding surface (18) is adhesively bonded using glue (15) to a second bonding surface (19) of the hollow fiber element (8), wherein at least the first bonding surface (7) of the housing (2) has been activated by plasma or corona pre-treatment prior to adhesive bonding, wherein the hollow fiber element (8) is sealed in a radial direction with respect to the adjacent tube end (5) at at least a first end (16), and wherein the hollow fiber membranes (9) of the hollow fiber element (8) are open at the first end (16),
**characterized in that**,
the housing (2) with its first bonding surface (7) is made of a first plastic and the intermediate piece (10) with its second bonding surface (14) is made of a second plastic which is different from the first plastic,
the housing (2) is designed as a flexible tube (4) made of a silicone,
the hollow fiber membranes of the hollow fiber element (8) are made of a polyethersulfone,
the intermediate piece (10) is made of thermoplastic, and
the intermediate pieces (10) is designed as a T-shaped connector with a radial branch (12) and a pass-through channel (11) as a connection to a ring-shaped channel (24) arranged between the tube (4) and the hollow fibre element (8).

2. The filter module according to claim 1,
**characterized in that**,
the first end (16) of the hollow fiber element (8) is directly adhesively bonded to the intermediate piece (10) firmly bonded to the tube (2).

3. The filter module according to any of claims 1 to 2,
**characterized in that**,
the first end (16) of the hollow fiber element (8) with its hollow fiber membranes (9) is adhesively bonded to the intermediate piece (10) using a polyurethane as glue (15).

4. The filter module according to any of claims 1 to 3,
**characterized in that**,
the intermediate piece (10) is made of polypropylene.

5. The filter module according to any of claims 1 to 4,
**characterized in that**,
at its second end (23) facing away from the first end (16), the hollow fiber element (8) is sealed in radial direction with respect to the adjacent tube end (6),
that its hollow fiber membranes (9) are open at the second end (23), and
that the second end (23) of the hollow fiber element (8) is directly adhesively bonded to the tube (2) or to a second intermediate piece (10) firmly bonded to the tube (2).

6. The filter module according to any of claims 1 to 4,
**characterized in that**,
the hollow fiber membranes (9) of the hollow fiber element (8) are adhesively bonded and sealed at the second end (23) facing away from the first end (16).

7. The filter module according to any of claims 1 to 6,
**characterized in that**,
the filter module (1) is attached to a flexible container and together they form a pre-sterilizable, connection-ready unit.

8. A method for producing a filter module (1) according to any of claims 1 to 7,
**characterized in that**
the following steps are carried out:
a) at least the first bonding surface (7) of the housing (2) is activated by plasma or corona pre-treatment prior to adhesive bonding,
b) the bonding surfaces (7, 14, 18, 19) are adhesively bonded to one another using a glue (15),
c) the glue is cured.

9. The method according to claim 8,
**characterized in that**,
the glue (15) in step (b) is mixed from two components according to a pre-specified ratio before application or potting.

10. The method according to claim 8 or 9,
**characterized in that**,
the glue in step (c) is cured in a temperature-controlled centrifuge.

## Revendications

1. Module de filtration (1) doté d'un boîtier (2) en matière plastique et d'un filtre (3) en matière plastique disposé dans le boîtier (2), le filtre (3) étant conçu comme un élément en fibre creuse (8) comportant une pluralité de membranes en fibre creuse (9) et relié au boîtier (2) par un élément intermédiaire (10) en matière plastique, ledit élément intermédiaire (10) étant collé à l'aide d'une matière adhésive (15) entre une première surface adhésive (7) du boîtier (2) et une seconde surface adhésive (14) de l'élément intermédiaire (10), la première surface adhésive (18) de l'élément intermédiaire (10) étant collée à l'aide de la matière adhésive (15) avec une seconde surface adhésive (19) de l'élément en fibre creuse (8), sachant qu'au moins la première surface adhésive (7) du boîtier (2) a été activée avant le collage par un prétraitement plasma ou corona, que l'élément en fibre creuse (8) est hermétique au moins à une première extrémité (16) en direction radiale par rapport à l'extrémité du tube (5) adjacente, et que les membranes en fibre creuse (9) de l'élément en fibre creuse (8) sont ouvertes à la première extrémité (16), **caractérisé en ce**
**que** le boîtier (2) et sa première surface adhésive (7) sont formés à partir d'une première matière plastique et l'élément intermédiaire (10) et sa seconde surface adhésive (14) sont formés à partir d'une seconde matière plastique, différente de la première matière plastique,
**que** le boîtier (2) est conçu comme un tube flexible (4) en silicone,
**que** les membranes en fibre creuse de l'élément en fibre creuse (8) sont réalisées en polyéther-sulfone,
**que** l'élément intermédiaire (10) est réalisé en thermoplastique, et
**que** l'élément intermédiaire (10) est conçu comme un raccord en forme de T doté d'une dérivation (12) s'étendant radialement et d'un canal de passage (11) servant de liaison avec un canal circulaire (24) disposé entre le tube (4) et l'élément en fibre creuse (8).

2. Module de filtration selon la revendication 1,
**caractérisé en ce**
**que** la première extrémité (16) de l'élément en fibre creuse (8) est collée directement avec l'élément intermédiaire (10) solidaire du tube (2).

3. Module de filtration selon l'une des revendications 1 à 2,
**caractérisé en ce**
**que** la première extrémité (16) de l'élément en fibre creuse (8) avec ses membranes en fibre creuse (9) est collée avec l'élément intermédiaire (10) à l'aide d'une matière adhésive (15) en polyuréthane.

4. Module de filtration selon l'une des revendications 1 à 3,
**caractérisé en ce**
**que** l'élément intermédiaire (10) est réalisé en polypropylène.

5. Module de filtration selon l'une des revendications 1 à 4,
**caractérisé en ce**
**que** l'élément en fibre creuse (8) est hermétique à sa seconde extrémité (23) opposée à la première extrémité (16) en direction radiale par rapport à l'extrémité du tube (6) adjacente,
**que** ses membranes en fibre creuse (9) sont ouvertes à la seconde extrémité (23), et que la seconde extrémité (23) de l'élément en fibre creuse (8) est collée directement avec le tube (2) ou avec un second élément intermédiaire (10) solidaire du tube (2).

6. Module de filtration selon l'une des revendications 1 à 4,
**caractérisé en ce**
**que** les membranes en fibre creuse (9) de l'élément en fibre creuse (8) sont collées et fermées à la seconde extrémité (23) opposée à la première extrémité (16).

7. Module de filtration selon l'une des revendications 1 à 6,
**caractérisé en ce**
**que** le module de filtration (1) est relié avec un contenant flexible, formant une unité pouvant être stérilisée à l'avance et prête à être branchée.

8. Procédé de fabrication d'un module de filtration (1) selon l'une des revendications 1 à 7, **caractérisé par**
les étapes suivantes:
a) au moins la première surface adhésive (7) du boîtier (2) est activée avant le collage par un prétraitement plasma ou corona,
b) les surfaces adhésives (7, 14, 18, 19) sont collées ensemble à l'aide d'une matière adhésive (15), et
c) la matière adhésive est durcie.

9. Procédé selon la revendication 8,
**caractérisé en ce**
**que** la matière adhésive (15) est mélangée à l'étape b) avant l'application ou le coulage à partir de deux composants dans une proportion prédéfinie.

10. Procédé selon la revendication 8 ou 9,
**caractérisé en ce**
**que** la colle est durcie à l'étape c) dans une centrifugeuse tempérée.
